# EUROPÄISCHE PATENTSCHRIFT

(11) **EP 3 129 742 B1**
(45) Veröffentlichungstag und Bekanntmachung des Hinweises auf die Patenterteilung: **28.03.2018**
(21) Anmeldenummer: 15714815.6
(22) Anmeldetag: 08.04.2015
(51) Int. Cl.: F41H 5/013

(54) **VORRICHTUNG ZUR BEFESTIGUNG BALLISTISCHER SCHUTZELEMENTE**
DEVICE FOR ATTACHING BALLISTIC PROTECTION ELEMENTS
DISPOSITIF DE FIXATION D'ÉLÉMENTS DE PROTECTION BALISTIQUE

(30) Priorität: 08.04.2014 DE 102014005092
(43) Veröffentlichungstag der Anmeldung: 15.02.2017
(73) Patentinhaber: Rheinmetall MAN Military Vehicles GmbH, 80995 München (DE)
(72) Erfinder: FRANZ, Manuel, 34233 Fuldatal (DE); ÖSTREICHER, Martin, 34346 Hann. Münden (DE)
(74) Vertreter: Horn Kleimann Waitzhofer Patentanwälte PartG mbB
(86) Internationale Anmeldenummer: PCT/EP2015/057545
(87) Internationale Veröffentlichungsnummer: WO 2015/155196

(56) Entgegenhaltungen:
- DE-A1- 10 043 026
- DE-A1-102011 053 564
- DE-C1- 4 017 167

## Beschreibung

Die Erfindung betrifft eine Vorrichtung zur Befestigung ballistischer Schutzelemente und zusätzlicher Anbauteile an einem insbesondere gegen Waffen- oder Mineneinwirkung zu schützenden Objekt, die einen an dem Objekt befestigbaren Schweißnocken umfasst, dessen dem Objekt zugewandter Bodenbereich über eine Schweißverbindung mit dem Objekt verbindbar ist, und der eine Gewindebohrung aufweist, in welche von außen eine Schraube einschraubbar ist.

Eine derartige Befestigungsvorrichtung ist beispielsweise aus den Dokumenten DE 20 2005 000 198 U1 und DE 10 2010 018 486 A1 bekannt. Als nachteilig hat sich bei Verwendung dieser bekannten Vorrichtungen erwiesen, dass bei der Befestigung sowohl eines ballistischen Schutzelementes als auch eines Anbauteiles an dem gleichen Schweißnocken diese Teile nicht zeitlich unabhängig voneinander montiert werden können. Außerdem ist es bei Verwendung der bekannten Schweißnocken in der Regel nicht möglich, das ballistische Schutzelement und das zusätzliche Anbauteil mit unterschiedlichen Drehmomenten an dem Schweißnocken - und damit an dem zu schützenden Objekt - anzuschrauben. Da aber die Schutzelemente mit einem geringeren Drehmoment befestigt werden müssen, als dieses für die Anbauteile durch entsprechende Normen vorgeschrieben ist, ist eine normengerechte Schraubverbindung der Anbauteile an den Schweißnocken häufig nicht möglich.

Die DE 40 17 167 C1 bildet einen Ausgangspunkt für den Oberbegriff des Anspruchs 1 und beschreibt ein Panzerschutzmodul, das zwischen einer vorderen und hinteren aktiven Platte eine inerte Matrix aufnimmt, in der druckinitiierbare Wirkelemente angeordnet sind, wobei das Modul mit Abstand zu einer Hauptpanzerung angeordnet ist, wobei die Wirkelemente auf der Seite der Hauptpanzerung gruppenweise oder partiell durch Segmente verdämmt sind und die hintere inaktive Platte in einem Abstand zu den Segmenten angeordnet ist, wobei zur Befestigung des Moduls auf der Hauptpanzerung Schrauben vorgesehen sind, in deren Wirkungsbereich Mittel zur Dämpfung von Schwingungen auf die Hauptpanzerung vorgesehen sind, und wobei die Dämpfungsmittel hochfrequente Schwingungen dämpfende Mittel oder Bestandteile der Schraube sind

Der Erfindung liegt die Aufgabe zugrunde, eine Vorrichtung der eingangs erwähnten Art anzugeben, bei welcher an dem gleichen Schweißnocken ein ballistisches Schutzelement und ein Anbauteil mit unterschiedlichen Drehmomenten befestigbar sind.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, einen Schweißnocken mit Innen- und Außengewinde zu verwenden. Dabei erfolgt das Anschrauben des jeweiligen ballistischen Schutzelementes mittels einer auf das Außengewinde des Schweißnockens aufschraubbaren Spannmutter mit einem ersten vorgebbaren Drehmoment. Die Spannmutter verfügt hierzu über eine Durchgangsbohrung mit Innengewinde. Durch diese Durchgangsbohrung kann das jeweilige Anbauteil mit dem Innengewinde des Schweißnockens verbunden werden. Da das Anbauteil auf der Spannmutter und nicht auf dem ballistischen Schutzelement anliegt, kann es mit einem zweiten, normgerechten Drehmoment an dem Schweißnocken befestigt werden, ohne das ballistische Schutzelement zu beschädigen.

Ein weiterer Vorteil der erfindungsgemäßen Vorrichtung besteht darin, dass die ballistischen Schutzelemente und die Anbauteile zeitlich unabhängig voneinander an dem zu schützenden Objekt befestigt werden können.

Zur Befestigung des Schweißnockens an dem zu schützenden Objekt kann der Schweißnocken bodenseitig eine umlaufende Fase aufweisen, die über eine Kehlnaht mit dem Objekt verschweißbar ist. Es ist aber auch möglich, einen Schweißnocken mit einem bodenseitig überstehenden Bund zu verwenden, der dann entweder randseitig über eine Kehlnaht oder über eine Lochschweißung mit dem Objekt verschweißbar ist.

Ferner hat es sich als vorteilhaft erwiesen, wenn auf der Unterseite der Schweißnocken ein Zentrierzapfen vorhanden ist, der in eine am zu schützenden Objekt vorhandene Bohrung passt und somit die exakte Position des Nockens vorgibt.

Zur Übertragung des Anzugmomentes bei der Befestigung des ballistischen Schutzelementes können in dem Bund der Spannmutter Bohrungen vorgesehen sein (so dass sich beispielsweise eine Zweilochmutter oder eine Kreuzlochmutter ergibt), in die zum Drehen der Spannmutter ein passendes Spezialwerkzeug eingreifen kann.

Es kann aber auch vorgesehen werden, dass zur Übertragung der Anzugsmomente der Bund der Spannmutter umfangseitig mit zwei gegenüberliegenden Schlüsselflächen versehen ist.

Weitere Einzelheiten und Vorteile der Erfindung ergeben sich aus den folgenden, anhand von Figuren erläuterten Ausführungsbeispielen. Es zeigen:
- Fig. 1: den Längsschnitt durch eine an einem zu schützenden Objekt angeordnete, einen Schweißnocken und eine Spannmutter enthaltende, erfindungsgemäße Vorrichtung mit an dem zu schützenden Objekt befestigten ballistischen Schutzelement;
- Fig. 2: die Fig. 1 entsprechende Ansicht, wobei an der Vorrichtung zusätzlich zu dem ballistischen Schutzelement noch ein Anbauteil befestigt ist;
- Fig.3-5: Längsschnitte von unterschiedlichen Ausführungsformen von Schweißnocken der erfindungsgemäßen Vorrichtung;
- Fig. 6 und 7: zwei Draufsichten auf die Bunde von zwei unterschiedlichen Ausführungsformen von Spannmuttern.

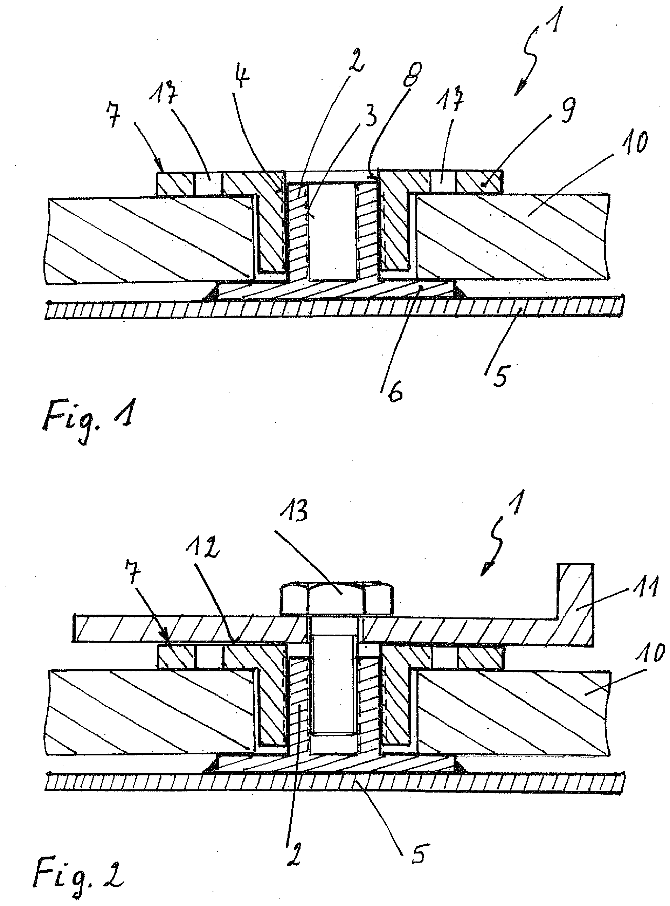

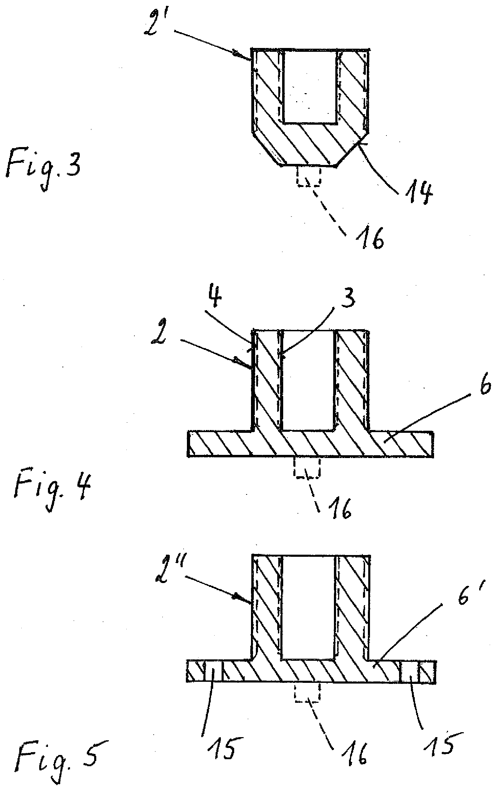

In Fig. 1 ist mit 1 eine erfindungsgemäße Vorrichtung bezeichnet, die einen Schweißnocken 2 mit einer zentrischen Gewindebohrung 3 und einem Außengewinde 4 umfasst (vgl. auch Fig. 4). Der Schweißnocken 2 ist an einem zu schützenden Objekt 5 (beispielsweise der Wanne eines Panzerfahrzeuges) befestigt und besitzt hierzu auf der dem Objekt 5 zugewandten Seite einen Bund 6, der beispielsweise randseitig mit dem Objekt 5 verschweißt ist.

Auf dem Außengewinde 4 des Schweißnockens 2 ist eine Spannmutter 7 mit einer Durchgangsbohrung mit Innengewinde 8 aufgeschraubt, die auf ihrer dem zu schützenden Objekt 5 abgewandten Seite einen Bund 9 aufweist, deren Größe derart gewählt ist, dass in dem montierten Zustand der Vorrichtung 1 (Fig. 1 und Fig. 2) ein ballistisches Schutzelement (Zusatzpanzerung) 10 zwischen dem Bund 9 der Spannmutter 7 und dem Bund 6 des Schweißnockens 2 befestigt ist.

Fig. 2 zeigt die Fig. 1 entsprechende Ansicht, wobei an der Vorrichtung 1 zusätzlich zu dem ballistischen Schutzelement 10 noch ein Anbauteil 11 befestigt ist. Hierzu wird auf die Oberseite 12 der Spannmutter 7 das Anbauteil 11 aufgelegt und mit einer in die Gewindebohrung 3 des Schweißnockens 2 einschraubbaren Schraube 13 an dem Schweißnocken 2 kraftschlüssig befestigt.

Die Fig. 3-5 zeigen Längsschnitte unterschiedlicher Ausführungsformen von Schweißnocken der erfindungsgemäßen Vorrichtung. Dabei weist in Fig. 3 der Schweißnocken 2' bodenseitig eine umlaufende Fase 14 auf, die über eine Kehlnaht mit dem zu schützenden Objekt 5 verschweißbar ist.

In den Fig. 4 und 5 besitzt der Schweißnocken 2 bzw. 2" bodenseitig einen Bund 6, 6', dessen randseitiger Umfang über eine Kehlnaht mit dem zu schützenden Objekt 5 verschweißbar ist (Fig. 4 sowie Fig. 1 und 2) oder durch den sich axial zwei Bohrungen 15 erstrecken (Fig. 5), so dass die Befestigung des Schweißnockens 2" an dem zu schützenden Objekt 5 über eine Lochschweißung durchführbar ist.

Wie in den Fig. 3-5 durch gestrichelte Linien angedeutet ist, können die Schweißnocken 2-2" auf ihren dem zu schützenden Objekt 5 zugewandten Seite zusätzlich jeweils einen Zentrierzapfen 16 aufweisen, der in eine am zu schützenden Objekt 5 vorhandene Bohrung passt und somit die exakte Position des Schweißnockens 2-2" vorgibt.

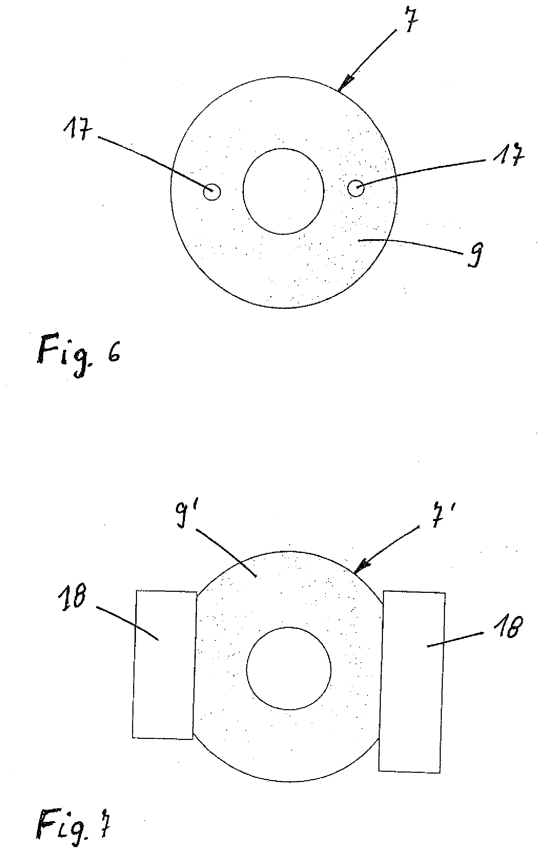

Zur Übertragung des Anzugmomentes bei der Befestigung des ballistischen Schutzelementes 10 kann die Spannmutter 7 beispielsweise als Zweilochmutter ausgebildet sein (Fig. 6), d.h., in dem Bund 9 der Spannmutter 7 befinden sich zwei gegenüberliegende Bohrungen 17, in die zum Drehen der Spannmutter 7 ein passendes Spezialwerkzeug eingreifen kann.

Es kann aber auch vorgesehen werden, dass zur Übertragung der Anzugsmomente der Bund 9' der Spannmutter 7' umfangseitig mit zwei gegenüberliegenden Schlüsselflächen 18 versehen ist (Fig. 7).

### Bezugszeichenliste

- 1: Vorrichtung
- 2-2": Schweißnocken
- 3: Gewindebohrung
- 4: Außengewinde
- 5: Objekt
- 6, 6': Bund (Schweißnocken)
- 7, 7': Spannmutter
- 8: Durchgangsbohrung mit Innengewinde
- 9, 9': Bund (Spannmutter)
- 10: Schutzelement
- 11: Anbauteil
- 12: Oberseite
- 13: Schraube
- 14: Fase
- 15: Bohrung
- 16: Zentrierzapfen
- 17: Bohrung
- 18: Schlüsselflächen

## Patentansprüche

1. Vorrichtung zur Befestigung ballistischer Schutzelemente (10) und zusätzlicher Anbauteile (11) an einem insbesondere gegen Waffen- oder Mineneinwirkung zu schützenden Objekt (5), die einen an dem zu schützenden Objekt (5) befestigbaren Schweißnocken (2-2") umfasst, dessen dem Objekt (5) zugewandter Bodenbereich über eine Schweißverbindung mit dem Objekt (5) verbindbar ist, und der eine Gewindebohrung (3) aufweist, in welche von außen eine Schraube (13) einschraubbar ist, wobei der Schweißnocken (2-2") mit einem Außengewinde (4) versehen ist, und wobei die Vorrichtung (1) eine Spannmutter (7; 7') mit einer Durchgangsbohrung mit Innengewinde (8) umfasst, die auf den Schweißnocken (2-2") aufschraubbar ist, **dadurch gekennzeichnet, dass** die Spannmutter (7; 7') auf ihrer dem zu schützenden Objekt (5) abgewandten Seite einen Bund (9; 9') aufweist, dessen Größe derart gewählt ist, dass im montierten Zustand der Vorrichtung (1) das jeweilige ballistische Schutzelement (10) zwischen dem Bund (9; 9') der Spannmutter (7; 7') und dem zu schützenden Objekt (5) sowie das entsprechende Anbauteil (11) zwischen dem Schraubenkopf der Schraube (13) und dem Bund (9; 9') der Spannmutter (7; 7') kraftschlüssig befestigbar sind.

2. Vorrichtung nach Anspruch 1, **dadurch gekennzeichnet, dass** der Schweißnocken (2') bodenseitig eine umlaufende Fase (14) aufweist, die über eine Kehlnaht mit dem zu schützenden Objekt (5) verschweißbar ist.

3. Vorrichtung nach Anspruch 1 , **dadurch gekennzeichnet, dass** der Schweißnocken (2) bodenseitig einen Bund (6) aufweist, dessen randseitiger Umfang über eine Kehlnaht mit dem zu schützenden Objekt (5) verschweißbar ist.

4. Vorrichtung nach Anspruch 1 , **dadurch gekennzeichnet, dass** der Schweißnocken (2") bodenseitig einen Bund (6') aufweist, durch den sich axial mindestens eine Bohrung (15) erstreckt, so dass die Befestigung des Schweißnockens (2") an dem zu schützenden Objekt (5) über eine Lochschweißung durchführbar ist.

5. Vorrichtung nach einem der Ansprüche 1 bis 4, **dadurch gekennzeichnet, dass** der Schweißnocken (2-2") auf seiner dem zu schützenden Objekt (5) zugewandten Seite mindestens einen Zentrierzapfen (16) aufweist.

6. Vorrichtung nach einem der Ansprüche 1 bis 5, **dadurch gekennzeichnet, dass** in dem Bund (9) der Spannmutter (7) mindestens zwei Bohrungen (17) angeordnet sind, in welche zum Drehen der Spannmutter (7) ein passendes Spezialwerkzeug eingreifen kann.

7. Vorrichtung nach einem der Ansprüche 1 bis 5, **dadurch gekennzeichnet, dass** der Bund (9') der Spannmutter (7') umfangseitig mit zwei gegenüberliegenden Schlüsselflächen (18) versehen ist.

## Claims

1. Device for fastening ballistic protective elements (10) and additional mounting parts (11) on an object (5) that is in particular to be protected from the effects of weapons or the effects of mines, said device comprising a welded cam (2-2") that can be fastened to the object (5) that is to be protected and the base region of said welded cam that is facing the object (5) can be connected via a welded connection to the object (5), and said welded cam comprises a threaded hole (3) and it is possible to screw a screw (13) into said threaded hole from the outside, wherein the welded cam (2-2") is provided with an outer thread (4), and wherein the device (1) comprises a clamping nut (7; 7') having a through-going hole having an inner thread (8) and said inner thread can be screwed onto the welded cam (2-2"), **characterised in that** a band (9;9') is provided on the side of the clamping nut (7;7') that is remote from the object (5) that is to be protected and the dimensions of said band are selected in such a manner that when the device (1) is in the assembled state the respective ballistic protective element (10) can be fastened between the band (9; 9') of the clamping nut (7; 7') and the object (5) that is to be protected, and also the corresponding attachment component (11) can be fastened in a non-positive locking manner between the screw head of the screw (13) and the band (9; 9') of the clamping nut (7; 7').

2. Device according to claim 1, **characterised in that** the welded cam (2') comprises on its base side a circumferential bevel (14) that can be welded via a fillet weld to the object (5) that is to be protected.

3. Device according to claim 1, **characterised in that** the welded cam (2) comprises on its base side a band (6) whose edge-side circumference can be welded via a fillet weld to the object (5) that is to be protected.

4. Device according to claim 1, **characterised in that** the welded cam (2") comprises on its base side a band (6') and at least one hole (15) extends through said band in an axial manner with the result that a hole welding process can be used to fasten the welded cam (2") to the object (5) that is to be protected.

5. Device according to any one of the claims 1 to 4, **characterised in that** the welded cam (2-2") comprises at least one centering spigot (16) on the side of said welded cam that is facing the object (5) that is to be protected.

6. Device according to any one of the claims 1 to 5, **characterised in that** at least two holes (17) are arranged in the band (9) of the clamping nut (7) and it is possible for a suitable special tool to engage in said holes in order to rotate the clamping nut (7).

7. Device according to any one of the claims 1 to 5, **characterised in that** the band (9') of the clamping nut (7') is provided on the circumferential side with two opposite-lying flat surfaces (18).

## Revendications

1. Dispositif de fixation d'éléments de fixation balistiques (10) et de pièces rapportées (11) supplémentaire sur un objet (5) à protéger en particulier contre l'action d'armes ou de mines, qui comprend un ergot de soudage (2-2") qui peut être fixé sur l'objet (5) à protéger, dont la zone de fond orientée vers l'objet (5) peut être reliée à l'objet (5) par le biais d'une soudure, et qui comporte un trou fileté (3), dans lequel une vis (13) peut être vissée depuis l'extérieur, l'ergot de soudage (2-2") étant pourvu d'un filetage extérieur (4), et le dispositif (1) comprenant un écrou de serrage (7 ; 7') doté d'un trou traversant à filetage intérieur (8), l'écrou de serrage pouvant être vissé sur l'ergot de soudage (2-2"), **caractérisé en ce que** l'écrou de serrage (7 ; 7') comporte, sur son côté opposé à l'objet (5) à protéger, un collet (9 ; 9'), dont la dimension est choisie de telle manière que, dans l'état monté du dispositif (1), l'élément de protection balistique (10) respectif et la pièce rapportée (11) correspondante peuvent être fixés par friction respectivement entre le collet (9 ; 9') de l'écrou de serrage (7 ; 7') et l'objet (5) à protéger, et entre la tête de vis de la vis (13) et le collet (9 ; 9') de l'écrou de serrage (7 ; 7').

2. Dispositif selon la revendication 1, **caractérisé en ce que** l'ergot de soudage (2') comporte côté fond un chanfrein (14) périphérique, qui peut être soudé à l'objet (5) à protéger par le biais d'une soudure d'angle.

3. Dispositif selon la revendication 1, **caractérisé en ce que** l'ergot de soudage (2) comporte côté fond un collet (6), dont la périphérie de bord peut être soudée à l'objet (5) à protéger par le biais d'une soudure d'angle.

4. Dispositif selon la revendication 1, **caractérisé en ce que** l'ergot de soudage (2") comporte côté fond un collet (6'), à travers lequel s'étend au moins un trou (15) de manière axiale, de sorte que la fixation de l'ergot de soudage (2") à l'objet (5) à protéger peut être effectuée par le biais d'un soudage en bouchon.

5. Dispositif selon l'une des revendications 1 à 4, **caractérisé en ce que** l'ergot de soudage (2-2") comporte au moins une broche de centrage (16) sur son côté orienté vers l'objet (5) à protéger.

6. Dispositif selon l'une des revendications 1 à 5, **caractérisé en ce qu'**au moins deux trous (17) sont ménagés dans le collet (9) de l'écrou de serrage (7), dans lesquels un outil spécial adapté peut venir en prise pour faire tourner l'écrou de serrage (7).

7. Dispositif selon l'une des revendications 1 à 5, **caractérisé en ce que** le collet (9') de l'écrou de serrage (7') est pourvu côté périphérie de deux surplats de serrage (18) opposés.
